Europäisches Patentamt

European Patent Office

Office européen des brevets

(11) Numéro de publication : **0 637 801 A1**

(12) **DEMANDE DE BREVET EUROPEEN**

(21) Numéro de dépôt : **94401498.4**

(22) Date de dépôt : **01.07.94**

(51) Int. Cl.⁶ : **G06F 13/12, H04L 29/06**

(30) Priorité : **21.07.93 FR 9308968**

(43) Date de publication de la demande :
**08.02.95 Bulletin 95/06**

(84) Etats contractants désignés :
**DE ES FR GB**

(71) Demandeur : **BULL S.A.**
**Tour BULL,**
**1, place Carpeaux**
**F-92800 Puteaux (FR)**

(72) Inventeur : **Bourbotte, Alain**
**4, rue Honegger**
**F-78100 Saint Germain en Laye (FR)**

(74) Mandataire : **Gouesmel, Daniel et al**
**BULL S.A.,**
**68, route de Versailles,**
**B.P. 45,**
**PC/LV-59C18**
**F-78430 Louveciennes (FR)**

(54) **Système de communication avec un réseau et protocole d'accès aux fournisseurs de transports appartenant à ce système.**

(57)    Système de communication (SCI) avec au moins un réseau (RE) comprenant un système hôte (HOST) associé au moyen d'un canal à au moins un processeur de communication (PC$_i$, PC$_j$) caractérisé en ce que, l'hôte (HOST) traitant les couches hautes (CH) et le processeur (PC$_i$, PC$_j$) les couches basses (CB) à partir de la couche de transport, il comprend des moyens d'accès aux différentes couches de transport comprenant :
— un premier module disposé au bas des couches hautes (CH),
— un second module (HI) appartenant au processeur disposé au haut de la couche de transport (C4),
— des unités d'accès spécifiques à chaque modèle, mises en oeuvre par commandes d'unité d'accès véhiculées par le canal faisant communiquer le premier et le second modules.
Applicable aux systèmes de télécommunications.

FIG.2

Jouve, 18, rue Saint-Denis, 75001 PARIS

EP 0 637 801 A1

La présente invention concerne un système de communication avec un réseau. Elle est applicable à tout type de réseau, notamment de type FDDI, normalisé à l'ANSI sous la référence X3T9-5 et à l'I.S.O., Organisation Internationale de Normalisation.

Les réseaux sont constitués par une pluralité de terminaux reliés entre eux par une liaison de transmission (le support de transmission correspondant est constitué par des fibres optiques, dans le cas d'un réseau de type FDDI). Un ordinateur relié à un réseau est considéré comme un terminal.

Les réseaux modernes fonctionnent suivant une pluralité de modèles de référence qui restent voisins en ce qui concerne la définition de leur architecture sous forme de couches normalisées. Parmi ces modèles, les plus connus sont les modèles OSI, ISO/DSA, TCP-IP ou encore UNIX. Ainsi, dans le modèle OSI, il y a sept couches d'activités différentes, la couche la plus basse (couche 1) correspondant à la transmission physique des signaux, la couche haute (couche 7) correspondant aux fonctions réalisées par les programmes d'application (plus simplement appelées applications) et les utilisateurs du réseaux considéré.

Dans la pratique courante, on est conduit à développer de plus en plus fréquemment des processeurs de communication associés à un ordinateur et dont le but est de réduire la charge de l'unité centrale de ce dernier, en y effectuant une partie de la gestion des communications avec les autres terminaux du réseaux. L'association d'un ordinateur et d'un processeur de communication constitue ce que l'on peut appeler un système de communication avec un réseau.

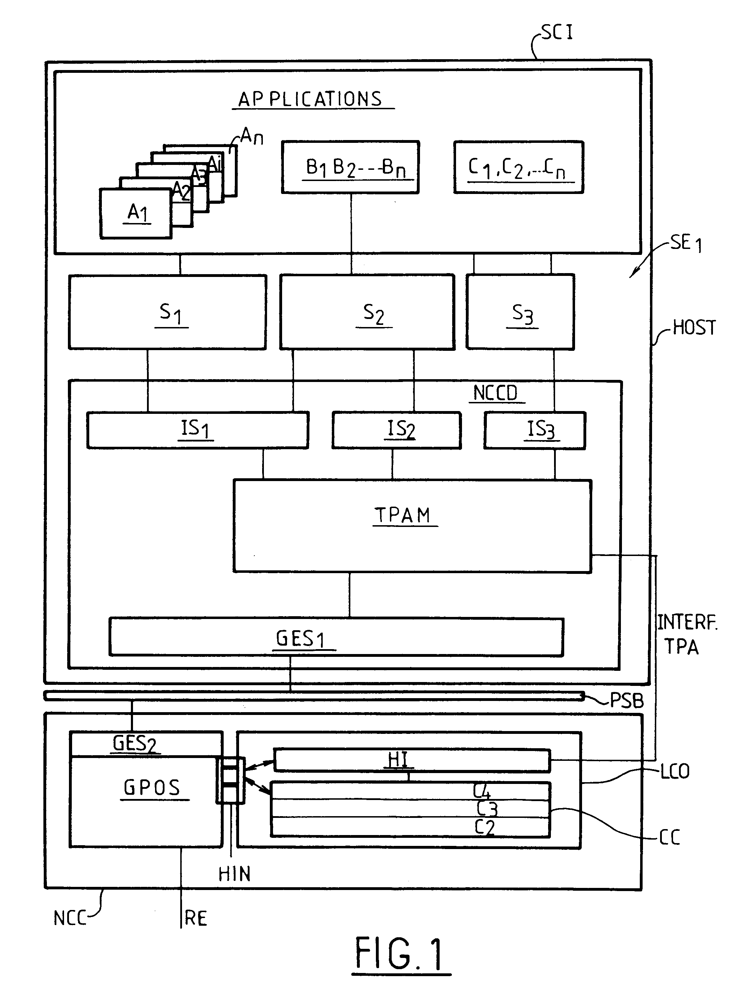

L'un de ceux-ci est par exemple décrit dans la demande de brevet français N° 9302902 déposée le 12.03.93 par la société demanderesse sous le titre "Système de communication avec un réseau". La structure générale tant matérielle que logicielle, de ce système de communication est rappelée à la figure 1. Il comprend un ordinateur HOST, encore appelé hôte qui communique par l'intermédiaire d'un bus interne PSB avec au moins un processeur de communication désigné par NCC. Ce dernier est connecté à un réseau RE, par exemple de type FDDI. La structure matérielle du processeur de communication est, par exemple, décrite soit dans la demande de brevet français N° 92 13653 déposée le 13.11.92 par la demanderesse sous le titre "Outil de simulation d'un code de réseau" ou encore dans la demande de brevet français N° 92 15521 dont le titre est "Système de transmission de données entre un bus d'ordinateur et un réseau", déposée le 22.12.92 par la même demanderesse.

Ce même processeur de communication assure la gestion du transfert des données entre l'ordinateur HOST qui possède un premier système d'exploitation SE1 (ce système peut être de type GCOS7 ou GCOS8 développé par la Société demanderesse ou de tout autre type), et le réseau RE. Le bus PSB est, par exemple, un bus de type MULTIBUSII (marque déposée par la Société INTEL) normalisé suivant la norme IEEE1296 (Institute of Electrical and Electronic Engineer).

Le processeur de communication adapte notamment les conditions de transmission des informations sur le bus d'ordinateur auquel il est connecté, aux conditions de transmission sur le réseau, celles-ci étant totalement différentes.

A la figure 1, on a montré à l'intérieur de l'ordinateur HOST, dont la structure matérielle est classique, les éléments constitutifs essentiels de son architecture logicielle. Ceux-ci sont les suivants :
- une pluralité d'applications $A_i$, $B_i$, $C_i$, ..., etc. respectant par exemple chacune les normes de l'un des modèles de référence OSI, ISO/DSA et IPS (on rappelle que le modèle IPS inclut sous la même dénomination, les sous-modèles TCP, UDP, IP, ICMP, notamment). Ces applications ont besoin, pour être totalement mises en oeuvre, d'un certain nombre d'informations et de données qui se trouvent par exemple dans l'un ou l'autre des terminaux ou ordinateurs connectés au réseau RE. Elles ont donc besoin d'établir un dialogue avec les autres applications mises en oeuvre par ces mêmes autres terminaux ou ordinateurs.
- les sessions $S_1$, $S_2$, $S_3$ correspondant respectivement aux applications $A_i$, $B_i$, $C_i$,..., etc. qui établissent précisément les conditions du dialogue avec les applications correspondantes des autres terminaux de RE.
- le serveur de communication désigné par NCCD, (la lettre D signifiant Driver en anglais, terme correspondant à module). Son rôle est d'organiser le transfert des données et le dialogue nécessaire à l'établissement des connexions, avec au moins un processeur de communication NCC. Il est entendu ici et dans la suite du texte qu'à un même hôte HOST (et donc à un même serveur NCCD) peuvent être associés plusieurs processeurs du même type que NCC mais également des processeurs de communication d'un autre type, l'essentiel étant que ces processeurs gèrent les couches basses (depuis la couche de transport) de différents modèles. Pour simplifier le raisonnement dans la description, on ne considère qu'un seul NCC mais le raisonnement reste valable pour plusieurs. Ce serveur de communication comprend :
- les interfaces $IS_1$, $IS_2$, $IS_3$ fournissant respectivement l'interface vers les services de transport aux sessions $S_1$, $S_2$, $S_3$ pour les modèles OSI, ISO/DSA, IPS,...

- le module TPAM supportant le protocole d'interface entre l'ordinateur HOST et le processeur de communication NCC. TPAM est le sigle anglo-saxon de Transport Protocole Access Module.
- le gestionnaire d'entrée/sortie $GES_1$ associé à une interface physique (non représentée) avec le bus PSB.

Les différents éléments constitutifs essentiels de l'architecture logicielle d'un processeur de type NCC (étant entendu que les éléments constitutifs de l'architecture matérielle sont décrits en détail dans les demandes N° 9213653 et N° 92 15 521 précitées) sont les suivantes :

- une interface physique correspondant à l'interface physique de l'hôte (elle aussi non représentée), ces deux interfaces étant ici de type multibus II. (norme IEEE 1296),
- le gestionnaire d'entrée/sortie $GES_2$ correspondant au gestionnaire d'entrée/sortie $GES_1$.

La transmission physique des données entre $GES_1$ et $GES_2$, via les interfaces physiques s'effectue selon le protocole PLAN ET mis au point par la Société demanderesse et décrit dans le brevet français n° 2 633 414 ayant pour titre "système informatique à interconnexion centrale".

- Le système d'exploitation GPOS décrit dans la demande de brevet N° 91 08907 déposé le 15.07.91 par la société demanderesse, sous le titre "Système d'exploitation pour dispositif universel de couplage d'un bus d'ordinateur à une liaison spécifique d'un réseau".
- l'interface HI appelée interface hôte (sigle anglo-saxon de Host Interface) qui assure le dialogue entre les différentes couches $C_4$ (couche de transport du code de communication CC mis en oeuvre par le processeur de communication, code qui sera défini plus loin) et l'une ou l'autre des interfaces $IS_1$ et $IS_2$ de HOST. Le dialogue HI-TPAM, suivant le protocole TPA, assure l'extension des services de transport entre CC et les sessions $S_1$ à $S_3$ de HOST. HI et TPAM assurent la manipulation des chemins de données entre HOST et NCC. Ils ouvrent et ferment les connexions, aussi bien pour le compte des sessions que pour celui de $C_4$, effectuent les transferts de données et les contrôles de flux entre HOST et CC, pour n'importe quelle partie de ce code relative soit au modèle OSI, soit à ISO/DSA, soit à IPS, soit encore pour tout autre modèle.
- le code de communication CC composé des couches $C_2$ à $C_4$ (respectivement les couches de liaison de données, de réseaux, de transport). Ce code est relatif à l'un ou l'autre des modèles de référence OSI, ISO/DSA, IPS, etc. On dit également qu'il fournit les empilements de communications $C_2$ à $C_4$ pour l'un ou l'autre de ces modèles. Ces empilements sont habituellement désignés sous le vocable anglo-saxon de STACK. CC comprend donc un stack OSI, un stack ISO/DSA (encore appelé DIWS), les stacks IPS et peut en contenir également d'autres. La couche $C_2$, dite LLC, ou encore couche de liaison de données est commune à l'ensemble de ces stacks.
- Un interface de communication HIN entre GPOS et CC qu'on peut voir sur la figure 1.
- Des moyens de connexion logiciels et matériels (non représentés pour simplifier), entre GPOS et le réseau RE. Ils sont décrits dans la demande de brevet français n° 92 11054 déposée le 16.09.92 par la société demanderesse sous le titre "Système de transmission de données entre un bus d'ordinateur à un réseau en forme d'anneau à très haut débit".

Lorsque qu'une application quelconque $A_i$, $B_i$, $C_i$, etc. sur l'hôte HOST, désire échanger des informations avec une application quelconque éloignée et située sur un terminal quelconque relié au réseau RE, elle passe par l'intermédiaire de la session correspondante ($IS_1$ à $IS_3$, etc.) qui va accomplir le rôle qui lui est normalement dévolu par le modèle de référence auquel elle appartient, c'est-à-dire qu'elle va négocier avec la session correspondante du terminal éloigné, l'établissement et la terminaison du "dialogue session" entre l'application correspondante et l'application éloignée. La session correspondante utilise alors l'interface $IS_1$ ou $IS_2$ ou $IS_3$ pour dialoguer avec TPAM qui dialogue à son tour avec l'interface HI du processeur NCC afin d'atteindre le service de transport correspondant. Dans le cas présent, l'interface de session est donc le demandeur de service de transport, l'interface HI fournissant l'accès au service de transport qui va être utilisé entre le système de communication SCI et le terminal éloigné avec lequel dialogue l'application $A_i$, $B_i$ ou $C_i$, etc. Le module TPAM fournit l'interface de session pour dialoguer avec HI et prolonge la connexion de transport entre l'ordinateur HOST et le processeur NCC. Pour ce faire, on définit un protocole d'accès utilisé entre ces deux derniers éléments, lequel est associé à des moyens d'accès aux couches de transport $C_4$ des différents modèles, permettant de relier le niveau inférieur des couches mises en oeuvre par l'ordinateur HOST aux dites couches de transport.

C'est précisément l'objet de la présente invention que de définir ces moyens d'accès ainsi que le protocole d'accès correspondant. Ce protocole d'accès, encore appelé interface de transport, est dénommé TPA (Transport Provider Access protocol).

Plus généralement les moyens d'accès appartenant aux systèmes de communication selon l'invention, permettent de relier le niveau inférieur des couches hautes (session, présentation, XTI, etc...) d'un modèle de référence déterminé aux couches de transport de ces mêmes modèles, que le service de réseau soit de type en mode connecté ou de type en mode non connecté. On rappelle par exemple que le mode connecté que l'on désigne par le sigle CONS (sigle anglo-saxon de Connected Oriented Network Service) et le mode non connecté que l'on désigne par le sigle CLNS (sigle anglo-saxon de Connection-Less Network Service) s'appuient sur les normes ISO 9878 et 8208 pour le premier et pour le second les normes 8473 et 9542 définissant les mécanismes et protocoles de routage associés.

Selon l'invention, le système de communication avec au moins un réseau comprenant un système hôte associé, au moyen d'un canal à au moins un processeur de communication lui-même relié à la liaison spécifique du réseau, l'hôte comportant un premier système d'exploitation associé à une pluralité d'applications et le processeur comprenant un second système d'exploitation qui organise son travail de transmission des données du canal vers le réseau et réciproquement, le système comportant :

- un serveur de télécommunication associé au premier système d'exploitation,
- un code de communication spécifique du processeur appartenant à une pluralité de modèles d'interconnexion de systèmes ouverts, associé au second système d'exploitation,

est caractérisé en ce que, le système hôte traitant les couches hautes des différents modèles et le processeur les couches basses à partir de la couche de transport, celles-ci s'appuyant sur au moins un service de réseau en mode connecté et/ou au moins un service de réseau en mode non connecté, il comprend les moyens d'accès aux couches de transport des différents modèles, permettant de relier le niveau inférieur des couches hautes aux couches de transport, lesquels comprennent :

- un premier module disposé à l'intérieur du serveur de télécommunication,
- un second module disposé à l'intérieur du code de communication,
- des unités d'accès spécifiques à chaque modèle,
- le premier et le second modules mettant en oeuvre toute unité d'accès déterminée au moyen de commandes d'unité d'accès véhiculées par le canal.

D'autres caractéristiques et avantages de la présente invention apparaîtront dans la description suivante donnée à titre d'exemple non limitatif et en se référant aux dessins annexés.

Sur ces dessins :

La figure 1 rappelle quels sont les différents éléments constitutifs essentiels d'un système de communication.

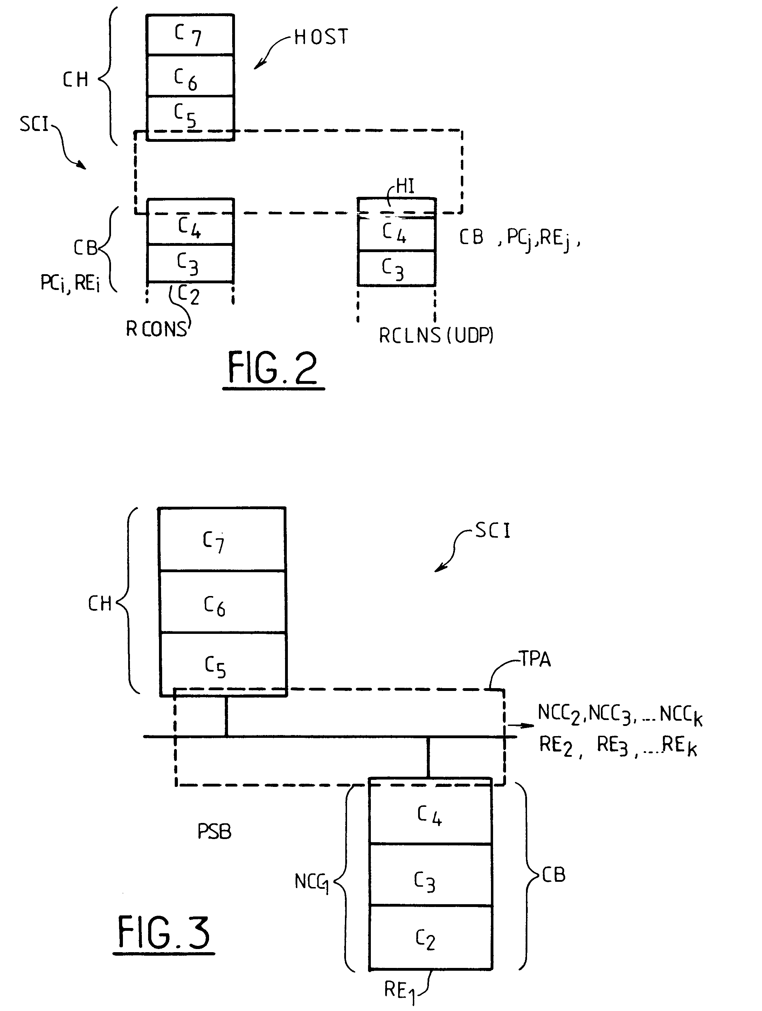

Les figures 2 et 3 sont des schémas simplifiés du système de communication selon l'invention montrant comment les moyens d'accès TPA relient le bas des couches hautes des modèles de référence aux couches de transport de ces mêmes modèles, la figure 2 montrant la structure d'un système selon l'invention quels que soient les moyens physiques de liaison qui existent entre l'hôte et son processeur de communication, la figure 3 étant le schéma s'appliquant plus particulièrement au système de communication montré aux figure 1 et 2 dans lequel un hôte est relié au processeur de communication par l'intermédiaire d'un canal PSB.

La figure 4 montre de manière plus détaillée un exemple de système de communication selon l'invention. On considère les figures 2 et 3.

Le système SCI selon l'invention met en oeuvre, au moyen du système hôte HOST, les couches hautes CH de l'un quelconque des modèles de référence OSI, ISO/DSA, IPS, (ce dernier pouvant aussi s'appuyer sur un service de réseau en mode non connecté). Si l'on se réfère aux figures 2 et 3, on a représenté à titre d'exemple, les trois couches hautes $C_5$, $C_6$, $C_7$ du modèle OSI. Les couches CH communiquent avec les couches basse CB, à savoir C4, C3, C2 de ces mêmes modèles. Ces couches peuvent être mises en oeuvre par un ou plusieurs processeurs de communication. A la figure 2, on a supposé que SCI était constitué de l'hôte HOST associé aux processeurs de communication $PC_i$, $PC_j$ qui peuvent être de différents types, leur point commun étant de mettre en oeuvre les couches basses CB. Le processeur $PC_i$ est relié à un réseau $RE_i$, alors que $PC_j$ est relié à un réseau $RE_j$. $RE_i$ et $RE_j$ peuvent être des réseaux de type différent. Par ailleurs, tant $PC_i$ que $PC_j$ peuvent mettre en oeuvre des couches de transport s'appuyant sur un service de réseau en mode connecté RCONS (modèles ISO/DSA ou TCP), soit sur un service de réseau en mode non connecté RCLNS (modèle UDP).

A la figure 3, les couches CH de l'hôte HOST communiquent avec les couches basses CB mises en oeuvre par une pluralité de processeurs de communication de type NCC, à savoir $NCC_1$, $NCC_2$,... $NCC_h$ connectés à des réseaux $RE_1$, $RE_2$, ... $RE_k$ qui peuvent être soit identiques, soit de types différents, où les couches de transport peuvent s'appuyer soit sur des services de réseau en mode connecté soit sur des services en mode non connecté.

Le système SCI selon l'invention comporte des moyens d'accès au fournisseur de transport de la couche $C_4$ permettant à la partie inférieure des couches hautes CH, ici à la partie inférieure de la couche $C_5$, de communiquer avec le haut de couche $C_4$. Ces moyens d'accès sont constitués :

- côté hôte par le module TPAM déjà décrit,
- côté processeurs de communication par l'interface HI, également décrite ci-dessus, en ce qui concerne la figure 3, ou toute interface jouant un rôle équivalent à HI à la figure 2.

- par des unités d'accès dont l'ensemble est désigné par TPA, symbolisé aussi bien à la figure 2 qu'à la figure 3 par un rectangle en trait interrompu reliant le bas de la couche $C_5$ et le haut de la couche $C_4$, de chacun des processeurs de communication.

A la figure 2, on a supposé que le transfert physique des données entre le bas des couches hautes CH et le haut de la couche de transport C4 s'effectuait au moyen d'un quelconque canal sûr n'autorisant pas la perte de message, alors qu'à la figure 3, ce transfert est, pour exemple, effectué au moyen d'un bus PSB.

Dans le cas où la couche de transport s'appuie sur un service de réseau en mode non connecté, RCLNS, on fait croire aux couches basses que les moyens d'accès TPA représentent le bas d'une application. Dans ce cas on peut conserver la notion de connexion tant qu'on n'est pas sur la couche de transport (à partir de laquelle on se trouve sur un réseau en mode non connecté, qui par définition n'admet pas la notion de connexion).

La partie importante des moyens d'accès du système de communication SCI selon l'invention est constituée par l'ensemble des unités d'accès, TPA.

Chaque unité d'accès peut être considérée comme un tuyau de dialogue entre toute interface HI et le module TPAM. On peut dire que ce tuyau de dialogue permet de raccorder les deux tuyaux déjà préexistants et prédéveloppés respectivement dans l'hôte HOST et dans tout processeur de communication $PC_i$ ou $PC_j$ ou $NCC_k$, ces deux tuyaux étant constitués par la succession des couches $C_7$ à $C_5$ pour l'hôte et $C_4$ à $C_2$ pour le processeur de communication. On peut dire que, lorsqu'une entrée d'application (une application peut comporter plusieurs entrée d'application, c'est-à-dire plusieurs connexions en mode connecté, ou plusieurs ports de dialogue en mode non connecté) déterminée cherche à établir une connexion avec une application éloignée mise en oeuvre sur un terminal éloigné connecté à un réseau $RE_i$, $RE_j$, $RE_k$, l'unité d'accès associée à cette application effectue un prolongement de connexion entre le bas de la couche $C_5$ et le haut de la couche $C_4$. A chaque entrée d'application déterminée correspond une unité d'accès déterminée. Il convient de préciser que le terme anglo-saxon correspondant à unité d'accès (on dit encore branchement) est plug. On peut définir une unité d'accès comme l'ensemble de tout ce qui sert à gérer un trafic déterminé relatif à une entrée d'application déterminée, ou encore comme les moyens de gestion de l'ensemble des ressources nécessaires à la vie du prolongement de la connexion propre à cette entrée d'application.

L'ensemble des unités d'accès est régi par un même protocole qui définit les règles de fonctionnement de ces unités d'accès. Ce protocole permet de commander l'échange de données entre TPAM et toute interface HI. Ainsi qu'il a été dit plus haut, il est basé sur la notion de branchement (plug). Il définit une interface de messages allant vers ou provenant du fournisseur de transport, c'est-à-dire de la couche $C_4$. Ces messages sont passés depuis ou vers l'hôte, ou encore vers ou depuis l'interface HI au moyen des dits branchements ou encore des dites unités d'accès. Celles-ci assurent donc un service contrôlé de l'échange de messages. Chaque unité d'accès, pendant son utilisation, est dédiée à un seul protocole de télécommunication déterminé, qu'il s'appuie sur un service de réseau en mode connecté ou sur un service de réseau en mode non connecté.

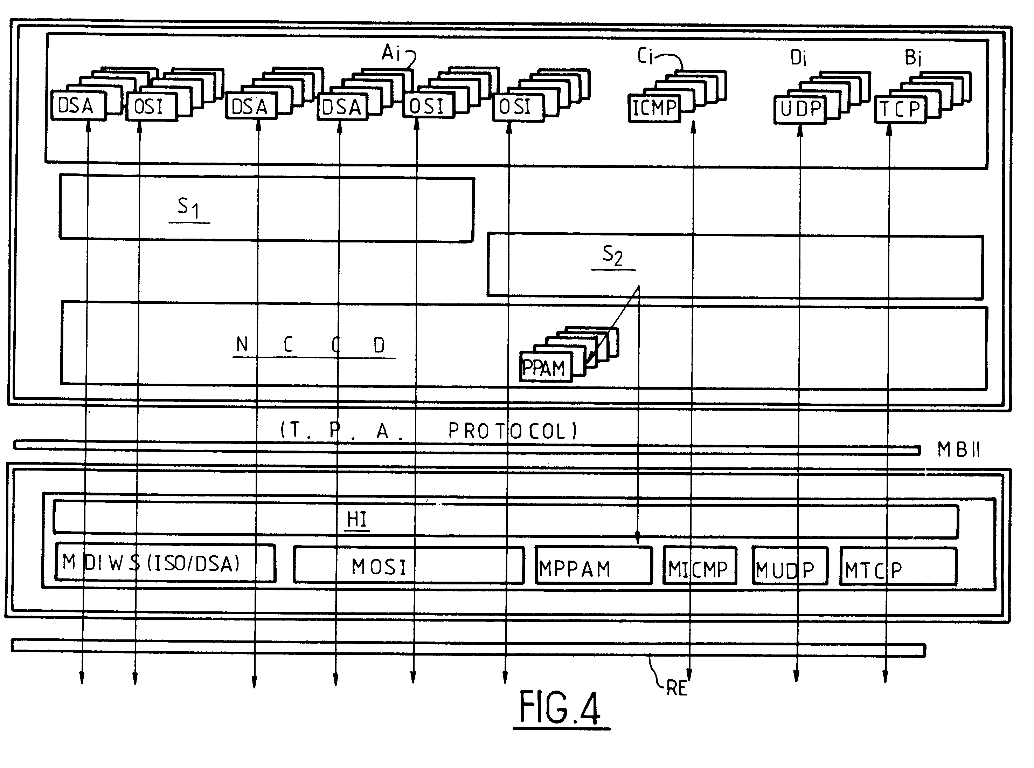

Dans l'exemple d'implémentation de l'invention montré aux figures 1 et 4, avec HOST et un seul processeur de communication de type NCC, il y a six types d'unités d'accès (6 types de branchements = plug), à savoir respectivement des types de branchement relatifs au protocole TCP, UDP, OSI, ISO/DSA, ICMP ou encore PPAM qui est un protocole spécifique de gestion relatif au processeur de communication NCC décrit dans l'une ou l'autre des demandes 92 13653 ou 92 15521 précitées.

Ces différents types d'unités d'accès permettent donc, ainsi qu'on peut le voir à la figure 4, d'effectuer les prolongements de connexion entre chacune des applications $A_l$ (OSI et ISO/DSA, ce dernier modèle appartenant à la famille des modèles ISO étant spécifique de la compagnie demanderesse), $B_i$ (TCP), $C_i$ (ICMP, RCLNS), Di (UDP, avec service de réseau en mode non connecté RCLNS), PPAM, via $S_1$, $S_2$, NCCD et HI vers les modules MDIWS et MISO, MTCP, MICMP, MUDP, MPPAM mettant en oeuvre les couches inférieures ($C_4$, $C_3$ par exemple) des modèles ISO/DSA, ISO, TCP, ICMP, UDP et PPAM (ce dernier peut être considéré comme proche de la famille ISO) et disposés dans NCC (se référer par exemple aux demandes 92 13653 ou 9215521 précitées).

Selon le protocole, un utilisateur (le système hôte mettant en oeuvre une entrée d'application déterminée) communique avec un fournisseur de transport (l'une des couches $C_4$ de NCC) ou bien, au contraire, un fournisseur de transport communique avec un utilisateur au moyen de messages, lesquels transportent une ou des primitives de services de transport. Ces messages sont passés entre TPAM et HI au moyen de commandes d'unité d'accès (Plug commands). Le nombre et la nature de ces commandes seront détaillés dans la suite de la description. En tout état de cause, toutes primitives indiquent la signification de ce qui est véhiculé par la commande. Ainsi, si la commande s'appelle OPEN_PLUG, ou demande d'ouverture d'accès, la primitive correspondante indique la signification de cette dernière, c'est-à-dire " il faut ouvrir une connexion".

Pour chaque type de service de transport, qu'il s'agisse des modèles TCP, UDP, ISO, ICMP, ISO/DSA ou PPAM, il existe deux types de primitives, celles qui proviennent de l'utilisateur (de l'hôte), et celles qui proviennent du fournisseur de transport $C_4$ de NCC.

Celles qui proviennent de l'utilisateur de transport effectuent des requêtes au fournisseur de transport ou répondent à un événement suscité par ce dernier (la liste de ces événements sera donnée pour l'un ou l'autre des modèles de référence énoncé ci-dessus, aux annexes 1 à 4).

Celle qui proviennent du fournisseur de transport sont soit la confirmation d'une requête de l'utilisateur ou la fourniture d'une indication à l'utilisateur de transport qu'un événement est survenu.

Chaque unité d'accès, (établie pour chaque connexion de transport et pour chaque pseudo-connexion de transport correspondant à un service de réseau en mode non connecté), établit ainsi, pour chaque événement, une liaison dite liaison d'unités d'accès (plug link en anglais) qui gère cet accès au transport. Chaque liaison à un moment donné est vue par le canal qui véhicule les messages de données entre l'hôte et le processeur comme étant dans un état déterminé (current state en anglais). Ce dernier est appelé état de l'unité d'accès (plug state en anglais). La liste des différents états possibles est donnée ci-dessous dans chacune des Annexe $A_1$ à $A_4$.

Une unité d'accès non utilisée peut seulement être dans un état dit libre ou gelé (respectivement FREE ou FROZEN en anglais).

Un état gelé d'une unité d'accès signifie qu'une erreur fondamentale a été commise dans une liaison entre l'hôte et le processeur de communication.

Un état libre signifie que l'unité de connexion correspondante n'est simplement pas utilisée au moment où elle est dans cet état. Cette unité d'accès à l'état libre est libre d'être utilisée par n'importe quel type de connexion, qu'elle corresponde à un modèle de référence donné ou à un autre.

Chaque transition d'état, c'est-à-dire chaque passage d'un état donné à un autre résulte de l'intervention d'une commande et dépend de l'état précédent dans lequel se trouvait la dite unité d'accès.

A un état déterminé correspond un ensemble de commandes autorisées. Chacune de ces commandes détermine la nature de l'état dans lequel va se trouver l'unité d'accès une fois que cette commande est arrivée, ainsi que les primitives à effectuer. A un modèle de référence déterminé, on peut associer une matrice de commandes autorisées en fonction des états de l'unité d'accès. Ces matrices seront décrites dans la suite de la description, en relation avec chacune des annexes A1 à A4.

Lorsque pour un accès donné, survient une séquence non autorisée de commandes, le serveur de communication NCCD ou le HI considère qu'il y a une erreur et effectue un traitement de détection d'erreur qui peut aboutir soit à la correction de cette erreur, soit à considérer que l'erreur est irrécupérable, et dans ce cas à geler l'unité d'accès correspondante.

Il convient de préciser qu'une séquence non autorisée de commande pour une connexion donnée est relativement grave parce qu'elle est la preuve :

- soit d'une erreur de l'hôte HOST,
- soit une erreur du fournisseur de transport, à savoir la couche $C_4$,
- soit d'une perte de message survenant sur le canal réputé sûr.

Toute erreur qui ne peut être récupérée par l'utilisateur, en l'occurrence ici le serveur de télécommunication NCCD du système hôte ou le HI du NCC est considérée comme une "erreur fatale" à l'accès.

On considère désormais les annexes A1 à A4 qui permettent de définir les principales commandes, c'est-à-dire les événements qui peuvent survenir en fonction de ces commandes, et les tables de transition des états de l'unité d'accès.

Un certain nombre de caractéristiques est commun à l'ensemble de ces annexes.

Une commande d'unité d'accès suivant le sens dans lequel elle est adressée produit ce que l'on appelle un événement d'accès (plug event en anglais).

Le contenu de chaque intersection d'une ligne et d'une colonne de la table de transition d'états (qui figure au bas de chaque annexe) présente à partir d'un état donné, l'état qui suit immédiatement le précédent, dans le temps, lorsque survient un événement accès.

Un point d'intersection d'une ligne et d'une colonne qui est vide dans une table de transition d'état signifie que la transition de cet état vers l'état suivant est impossible. Ce serait le cas de l'arrivée d'une commande non autorisée lorsque l'accès correspondant est dans cet état. Sur cette table, les événements et les états d'accès sont représentés par un chiffre qui représente le code correspondant soit de cet événement soit de cet état.

La description plus détaillée des annexes A1 et A4 qui suit permettra de mieux comprendre les caractéristiques énoncées ci-dessus.

On considère donc l'annexe A1 qui concerne la définition des événements des états et de la table de transition pour les modèles de référence ISO, ISO/DSA (DIWS, propre à la société demanderesse) et PPAM dont on a vu qu'il est assimilable à un modèle de référence ISO.

Si on considère le tableau 1, on voit qu'il est constitué de trois colonnes $CO_1$, $CO_2$, $CO_3$. Il en est de même du tableau 2.

Si l'on revient au tableau 1, la colonne $CO_1$ contient les différents événements correspondants aux commandes en cours pour l'unité d'accés correspondante. Ces événements sont donnés ici par leur numéro d'évènement, à savoir 0, 1, 2, 3, 4, 5 et ainsi de suite jusqu'à 17. En ce qui concerne le tableau 2, la colonne $CO_1$ comprend la liste des états possibles, également donné par leur code d'état, à savoir 0, 1, 2, 4, 17, 18, 30.

Pour le tableau 1, la colonne $CO_2$ indique les différentes commandes en cours qui peuvent survenir pour l'unité d'accès correspondante, et qui par conséquent sont autorisées, alors que la colonne $CO_3$ indique la provenance des commandes. Ainsi, la commande en cours appelée OPEN_PLUG qui correspond à événement 0, et est en provenance de l'interface HI, signifie une demande "entrante" d'ouverture d'accès provenant de HI. De même l'événement dont le numéro de code est 1, correspond à une commande OPEN_PLUG, provenant cette fois-ci du serveur de télécommunication NCCD, signifiant qu'il s'agit d'une demande "sortante" d'ouverture d'accès. En continuant, on voit par exemple que l'événement 2 est relatif à une commande "entrante" d'acquittement d'une précédente demande d'ouverture "sortante" d'accès, commande appelée OPEN_PLUG_ACK provenant de HI et ainsi de suite. Le détail des commandes sera décrit dans la suite de la description.

Si l'on considère le tableau 2, la colonne $CO_2$ indique la nature des états et la colonne $CO_3$ indique la provenance de la commande relative à ces états. Ainsi, l'état référencé 0 indique que l'état de l'unité d'accés est libre, l'état référencé 1 indique que l'on est en attente de l'acquittement par NCC de la demande d'ouverture d'accès, alors que l'état référencé 2 signifie que l'on est en attente de l'acquittement par HI de demande d'ouverture d'accès. L'état référencé 4 indique que l'unité d'accès correspondante est en train d'effectuer un transfert de donnée, soit dans un sens, soit dans l'autre. L'état référencé 17 indique que l'on est en attente d'un acquittement pour NCCD de fermeture d'accès (la commande correspondante s'appelle CLOSE_PLUG_ACK). L'état référencé 18 indique que l'on est en attente d'une confimation de HI d'une fermeture d'accès. L'état référencé 30 indique que l'unité d'accès est gelée.

Si l'on considère le tableau 3 qui montre la table des transitions d'états d'unité d'accès en fonction des événements, on a fait figurer, au niveau des colonnes, l'ensemble des événements qui figure dans la colonne $CO_1$ du tableau 1, c'est-à-dire, les événements 0, 1, 2, 3, 4, ainsi de suite jusqu'à 17 et on a fait figurer suivant les lignes les différents états possibles qui figurent dans la colonne $CO_1$ du tableau 2, c'est-à-dire les états 0,1,2,4, 17,18, 30. La table des états d'unité d'accès doit se lire de la manière suivante :

On se réfère par exemple à l'intersection de la colonne 1, (événement 1), avec la première ligne, (état 0). Cela signifie que l'unité d'accès étant dans l'état 0 et recevant la commande en cours correspondant à événement 1, c'est-à-dire une demande d'ouverture d'accès OPEN_PLUG provenant de NCCD va passer dans l'état 2, c'est-à-dire l'attente de l'acquittement d'une demande d'ouverture d'accès provenant de HI. De même, si l'on considère le point d'intersection de l'événement 9 avec l'état 4, cela signifie que l'unité d'accès étant dans l'état 4, c'est-à-dire dans un état où s'effectue les transferts de données, l'état suivant sera également l'état 4. Si l'on considère l'intersection de l'événement 9 avec l'état 17, attente de l'acquittement d'une fermeture d'accès provenant de NCCD, l'état suivant est également l'état 17 tant que le serveur NCCD n'a pas envoyé d'acquittement de demande de fermeture d'accès. De même si l'on considère l'intersection de l'événement 5 avec l'état 4 cela signifie que étant dans l'état 4, (le transfert de données), lorsque survient l'événement 5 qui est une fermeture d'accès (CLOSE_PLUG) provenant du serveur NCCD, on passe à l'état 18 qui est l'attente de l'acquittement de cette même fermeture d'accès, provenant de HI.

Il est bien évident que les annexes A2 à A4 se lisent, pour chacun de leurs tableaux 1, 2, 3, exactement de la même façon que les tableaux correspondant de l'annexe A1, et ce, respectivement pour IPS, TCP, UDP-ICMP.

Il convient maintenant de définir ce que sont les différentes commandes et la manière dont elles sont constituées.

A chaque commande d'accès correspond un seul message d'accès et ce dernier contient une seule commande. Chaque message transportant une commande, appelé plus simplement message de commande est constitué :

- d'une partie appelée entête (header). Celle-ci comprend une partie de dimension constante et une partie de dimension variable qui est fonction de la nature de la commande. Cette dernière décrit notamment les paramètres de la commande ainsi que la localisation des unités d'accès utilisant ces données, qu'il s'agisse d'émetteur ou de récepteur. Cette partie de dimension variable peut également comprendre d'autres paramètres et d'autres données relatives aux utilisateurs, suivant le détail de la description de la commande.

Dans toute commande, l'entête ayant une longueur constante indique le code de la commande, la nature de la version du protocole TPA, l'identification du protocole, c'est-à-dire l'identification du modèle de référence correspondant, c'est-à-dire le modèle ISO, ou encore TCP ou encore UDP, etc., la longueur de la commande ainsi que l'unité d'accès destinatrice de celle-ci, à savoir soit sur HI, soit sur NCCD ainsi que l'unité d'accès à la source de la commande, respectivement soit à NCCD, soit à HI.

Les principales commandes sont les suivantes :

1. **Commande OPEN_PLUG** : cette commande permet d'établir une liaison entre un serveur NCCD et l'interface HI. Elle peut affecter aussi bien les modèles de référence, ISO, ISO/DSA ou PPAM et dans ces 3 cas établit aussi une connexion, que ICMP, TCP ou UDP. Dans ces trois derniers cas, et pour PPAM cette commande, de par les définitions de ces protocoles, n'est utilisée que pour l'ouverture d'un accès "vers l'extérieur", c'est-à-dire du hôte vers le processeur de communication. Il est clair que la nature des paramètres qui sont inscrits à l'intérieur de cette commande dépend du modèle de référence utilisé et que ces paramètres ne sont pas les mêmes qu'ils s'agissent des modèles de référence de type ISO, ISO/DSA, PPAM ou des modèles de référence TCP, ICMP, ou UDP.

2. **Commande OPEN_PLUG_ACK** : cette commande est la réponse positive à la commande précédente OPEN_PLUG, et ceci lorsque le récepteur accepte cette demande d'accès et la gestion du transport ou de la session correspondante. Là également, les paramètres dépendent du modèle de référence utilisé.

3. **Commande CLOSE_PLUG** : cette commande est utilisée pour clore une liaison correspondant à une unité d'accès donnée. Cette commande peut également être utilisée lorsque la liaison n'est pas acceptable par le récepteur (HI ou NCCD). Dans cette commande, la raison pour laquelle la fermeture de la liaison est demandée est indiquée.

4. **Commande CLOSE_PLUG_ACK** : la fonction de cette dernière est d'acquitter de manière obligatoire une commande CLOSE_PLUG (sauf en cas de réponse négative à une commande OPEN_PLUG).

5. **Commande FREEZE_PLUG** : cette commande permet de geler une liaison aussi bien du côté du serveur NCCD que de l'interface HI. Elle survient par exemple lorsqu'une erreur non récupérable a été détectée sur l'un ou l'autre des deux côtés du canal, qu'il s'agisse de l'hôte ou du processeur de communication. Cette commande ne devrait être utilisée que de manière très exceptionnelle.

6. **Commande OPTIONS** : cette commande permet de négocier des options associées à un protocole de transport donné pour une liaison correspondante à une unité d'accès donnée.

7. **Commande CONNECT** : cette commande permet d'établir une connexion de type TCP, ICMP ou UDP entre l'hôte HOST et un terminal éloigné ou inversement. Elle ne peut être utilisée que pour ces modèles et ce pour les liaisons d'unité d'accès déjà ouvertes mais pas encore connectées. Dans les modèles UDP et ICMP, la commande CONNECT peut être seulement dirigée "vers l'extérieur", c'est-à-dire vers un terminal éloigné pour le premier, ou vers le stack ICMP à l'intérieur du processeur NCC, pour le second.

8. **Commande ACCEPT** : cette commande est la réponse positive à la commande précédente CONNECT lorsque le récepteur accepte la nouvelle connexion de type TCP, ICMP ou UDP. Cette commande renvoie la liaison propre à l'unité d'accès TCP, ICMP ou UDP qui accepte cette nouvelle connexion. Quand cette commande ACCEPT est envoyée en réponse par l'interface hôte HI, ce qui est le seul cas possible pour une liaison de type ICMP ou UDP, la liaison d'unité d'accès qui assure la réponse doit être la même que celle qui a été utilisée pour envoyer la commande CONNECT. Cependant, lorsque cette commande ACCEPT est envoyée en tant que réponse par le serveur NCCD, cette liaison (qui est de type TCP) peut être autre que celle qui a été utilisée pour transporter la commande CONNECT. Cette commande ACCEPT doit être acquittée par une commande ACCEPT_ACK ou doit être déconnectée par une commande DISCONNECT, non acquittée, transportée sur la même liaison d'unité d'accès.

9. **Commande ACCEPT_ACK** : cette commande est la réponse positive à la commande précédente ACCEPT lorsque l'interface HI accepte la nouvelle connexion et sa gestion de transport par l'unité d'accès correspondante. Si la commande ACCEPT n'est pas autorisée, HI doit envoyer une commande de déconnexion DISCONNECT, sans acquittement. Cette commande est utilisable seulement par HI, à destination de l'hôte HOST. La liaison d'unité d'accès qui transporte la commande ACCEPT_ACK est celle qui avait déjà transporté la commande ACCEPT.

10. **Commande ORLS** : cette commande est utilisée pour terminer de manière sécurisée une connexion de type TCP.

11. **Command DISCONNECT** : cette commande est utilisée pour terminer soit une connexion TCP, ICMP ou UDP . Elle est la seule réponse possible de refus à une commande CONNECT quand la connexion UDP ou TCP n'est pas acceptable par le récepteur de la commande CONNECT. De la même façon c'est la seule réponse possible de refus à une commande ACCEPT quand celle-ci n'est pas acceptée.

12. **Commande DISC_ACK** : cette commande est l'acquittement obligatoire d'une commande DISCONNECT appliquée à une connexion TCP ou UDP (sauf en cas de réponse négative à une réponse CONNECT ou une commande ACCEPT). Au cas où cet acquittement est effectué, l'une comme l'autre des deux unités d'accès TCP ou UDP sont mises dans un état IDLE (cet état signifiant que la présence d'une application reste connue du transport)..

13. **Commande DATA** : cette commande permet d'échanger des données utilisateurs entre HI et NCCD et ce par l'intermédiaire des unités d'accès.

14. **Commande EXDT** : cette commande est analogue à la précédente, mais pour les Expedited Data (données de type connu de tous les protocoles, CONS).

15 **Commande UNITDATA** : cette commande permet d'échanger des datagrammes entre des unités d'accès utilisées lorsque le modèle de référence s'appuie sur un service de réseau en mode non connecté, par exemple de type UDP ou ICMP (CLNS).

16. **Commande UDERROR** : cette commande permet de transporter des unités de données destinées à signifier des erreurs, pour des unités d'accès du modèle de référence s'appuyant sur un service de réseau en mode non connecté.

17. **Commande CREDIT** : cette commande permet d'envoyer un crédit à l'unité d'accès même s'il n'y a pas de données à envoyer ou si l'envoi de données n'est pas autorisé en raison d'un manque d'allocation de crédit. Ceci peut survenir par exemple dès l'ouverture d'une connexion ou d'une liaison d'accès.

18. **Commande EXDT_CREDIT** : cette commande est analogue à la précédente pour les crédits des Expedited Data.

19. **Commande ALIVE** : cette commande ne figure sur aucune des tables des tableaux des annexes A1 à A4 car elle n'influence pas les transitions d'états. Elle permet de gérer le contrôle direct de l'état opérationnel de l'autre système. Cela signifie que NCCD contrôle l'état opérationnel de HI et réciproquement : en d'autres termes, cela a pour conséquences :

- au démarrage : NCCD effectue l'opération de chargement du logiciel nécessaire au fonctionnement de NCC et doit être averti par HI que sa phase d'initialisation est terminée et qu'il est dans un état qui lui permet de travailler.
- en période de travail normal : NCCD et HI s'informent périodiquement de leur état opérationnel réciproque. Ainsi, quand soit NCCD ou HI reçoit une commande ALIVE d'interrogation, l'autre doit répondre immédiatement en lui renvoyant une commande ALIVE en lui indiquant soit la raison de l'erreur s'il y en a une, soit son bon fonctionnement si aucune erreur n'a été détectée. Si aucune réponse n'est reçue au bout d'un temps prédéterminé, une seconde commande ALIVE d'interrogation est envoyée et alors si à nouveau aucune réponse n'est reçue, l'autre côté est considéré comme mort, c'est-à-dire en erreur fatale.
- en cas de perturbation de fonctionnement : quand l'hôte HOST désire terminer la session du processeur de communication correspondant NCC, ou lorsqu'une erreur fatale lente survient, la commande ALIVE est utilisée pour avertir l'autre partie qui doit alors prendre les mesures conservatoires nécessaires de son côté.

Par ailleurs, l'homme de métier trouvera, en annexe 5 le contenu syntaxique donné en langage C de chaque commande. Ce contenu une fois connu et appliqué par tous les utilisateurs permet à chacun de ceux-ci de se comprendre et d'interpréter les commandes de la même façon quels qu'ils soient et où qu'ils soient.

ANNEXE 1

|  | CO_1 | CO_2 | CO_3 |  |
|---|---|---|---|---|
|  | Evénements | Commandes en cours | provenance |  |
|  | 0: | OPEN_PLUG | HI |  |
|  | 1: | OPEN_PLUG | NCCD |  |
|  | 2: | OPEN_PLUG_ACK | HI |  |
|  | 3: | OPEN_PLUG_ACK | NCCD |  |
|  | 4: | CLOSE_PLUG | HI |  |
|  | 5: | CLOSE_PLUG | NCCD |  |
|  | 6: | CLOSE_PLUG_ACK | HI |  |
|  | 7: | CLOSE_PLUG_ACK | NCCD |  |
|  | 8: | DATA ENVOI | HI | Tableau 1 |
|  | 9: | DATA ENVOI | NCCD |  |
|  | 10: | CREDIT | HI |  |
|  | 11: | CREDIT | NCCD |  |
|  | 12: | EXDT | HI |  |
|  | 13: | EXDT | NCCD |  |
|  | 14: | EXDT_CREDIT | HI |  |
|  | 15: | EXDT_CREDIT | NCCD |  |
|  | 16: | FREEZE_PLUG | HI |  |
|  | 17: | FREEZE_PLUG | NCCD |  |

|  | CO_1 | CO_2 | CO_3 |  |
|---|---|---|---|---|
|  | Etats | Nature états | provenance |  |
|  | 0: | LIBRE |  |  |
|  | 1: | attente OPEN_PLUG_ACK | NCCD |  |
|  | 2: | attente OPEN_PLUG_ACK | HI |  |
|  | 4: | Transfert données |  | Tableau 2 |
|  | 17: | attente CLOSE_PLUG_ACK | NCCD |  |
|  | 18: | attente CLOSE_PLUG_ACK | HI |  |
|  | 30: | gelé |  |  |

Evénements

| Etats | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|
| 0 | 1 | 2 | . | . | . | . | . | . | . | . | . | . | . | . | . | . | 30 | 30 |
| 1 | . | . | . | 4 | . | 0 | . | . | . | . | . | . | . | . | . | . | 30 | 30 |
| 2 | . | . | 4 | . | 0 | . | . | . | . | . | . | . | . | . | . | . | 30 | 30 |
| 4 | . | . | . | . | 17 | 18 | . | . | 4 | 4 | 4 | 4 | 4 | 4 | 4 | 4 | 30 | 30 |
| 17 | . | . | . | . | . | 0 | . | 0 | . | 17 | . | 17 | . | 17 | . | 17 | 30 | 30 |
| 18 | . | . | . | . | 0 | . | 0 | . | 18 | . | 18 | . | 18 | . | 18 | . | 30 | 30 |
| 30 | 30 | 30 | 30 | 30 | 30 | 30 | 30 | 30 | 30 | 30 | 30 | 30 | 30 | 30 | 30 | 30 | 30 | 30 |

Tableau 3

Table des transitions d'états des unités d'accés

Modèles ISO, ISO/DSA, PPAM

ANNEXE 2

| $CO_1$ | $CO_2$ | $CO_3$ |
|---|---|---|
| Evénements | Commandes en cours | provenance |
| 1: | OPEN_PLUG | NCCD |
| 2: | OPEN_PLUG_ACK | HI |
| 4: | CLOSE_PLUG | HI |
| 5: | CLOSE_PLUG | NCCD |
| 6: | CLOSE_PLUG_ACK | HI |
| 7: | CLOSE_PLUG_ACK | NCCD |
| 10: | CREDIT | HI |
| 11: | CREDIT | NCCD |
| 14: | EXDT_CREDIT | HI |
| 15: | EXDT_CREDIT | NCCD |
| 16: | FREEZE_PLUG | HI |
| 17: | FREEZE_PLUG | NCCD |
| 18: | OPTIONS | HI |
| 19: | OPTIONS | NCCD |

Tableau 1

| $CO_1$ | $CO_2$ | $CO_3$ |
|---|---|---|
| Etats | Nature états | provenance |
| 0: | LIBRE | |
| 2: | attente OPEN_PLUG_ACK | HI |
| 3: | IDLE | |
| 5: | attente OPTIONS | HI |
| 17: | attente CLOSE_PLUG_ACK | NCCD |
| 18: | attente CLOSE_PLUG_ACK | HI |
| 30: | gelé | |

Tableau 2

Evénements

| Etats | 1 | 2 | 4 | 5 | 6 | 7 | 10 | 11 | 14 | 15 | 16 | 17 | 18 | 19 |
|---|---|---|---|---|---|---|---|---|---|---|---|---|---|---|
| 0 | 2 | . | . | . | . | . | . | . | . | . | 30 | 30 | . | . |
| 2 | . | 3 | 0 | . | . | . | . | . | . | . | 30 | 30 | . | . |
| 3 | . | . | 17 | 18 | . | . | 3 | 3 | 3 | 3 | 30 | 30 | . | 5 |
| 5 | . | . | 17 | 18 | . | . | 5 | 5 | 5 | 5 | 30 | 30 | 3 | . |
| 17 | . | . | . | 0 | . | 0 | . | 17 | . | 17 | 30 | 30 | . | 17 |
| 18 | . | . | 0 | . | 0 | . | 18 | . | 18 | . | 30 | 30 | 18 | . |
| 30 | 30 | 30 | 30 | 30 | 30 | 30 | 30 | 30 | 30 | 30 | 30 | 30 | 30 | 30 |

Tableau 3

Table des transitions d'états des unités d'accés (plugs)
communes aux modèles IPS

Les annexes 3 et 4 sont des sous-automates de cet automate ci.

ANNEXE 3

| CO₁ | CO₂ | | CO₃ | |
|---|---|---|---|---|
| Evénements | Commandes en cours | | provenance | |
| 8: | DATA | | HI | |
| 9: | DATA | | NCCD | |
| 12: | EXDT | | HI | |
| 13: | EXDT | | NCCD | |
| 20: | CONNECT | | HI | |
| 21: | CONNECT | | NCCD | |
| 22: | ACCEPT_1 | | HI | |
| 23: | ACCEPT_1 | | NCCD | Tableau 1 |
| 24: | ACCEPT_2 | | NCCD | |
| 25: | PASS_CON | | | |
| 26: | ACCEPT_ACK | | HI | |
| 27: | DISCONNECT | | HI | |
| 28: | DISCONNECT | | NCCD | |
| 29: | ORLS | | HI | |
| 30: | ORLS | | NCCD | |
| 31: | DISCONNECT_ACK | | HI | |
| 32: | DISCONNECT_ACK | | NCCD | |

| CO₁ | CO₂ | | CO₃ | |
|---|---|---|---|---|
| Etats | Nature états | | provenance | |
| 3: | IDLE | | | |
| 4: | transfert de données | | | |
| 6: | attente ACCEPT | | HI | |
| 7: | attente ACCEPT | | NCCD | |
| 8: | attente ACCEPT_ACK on resp | | HI | Tableau 2 |
| 9: | attente ACCEPT_ACK on nego | | HI | |
| 10: | Host Listen | | | |
| 11: | Remote Listen | | | |
| 12: | attente DISCONNECT_ACK | | HI | |
| 13: | attente DISCONNECT_ACK | | NCCD | |
| 16: | Crossing ORLS | | | |

Evénements

| Etats | 8 | 9 | 12 | 13 | 20 | 21 | 22 | 23 | 24 | 25 | 26 | 27 | 28 | 29 | 30 | 31 | 32 | |
|---|---|---|---|---|---|---|---|---|---|---|---|---|---|---|---|---|---|---|
| 3 | . | . | . | . | 7 | 6 | . | . | . | 4 | . | . | . | . | . | . | . | |
| 4 | 4 | 4 | 4 | 4 | . | . | . | . | . | . | . | 13 | 12 | 11 | 10 | . | . | |
| 6 | . | . | . | . | 3 | . | 4 | . | . | . | . | 3 | . | . | . | . | . | |
| 7 | . | . | . | . | . | 3 | . | 8 | 9 | . | . | . | 3 | . | . | . | . | Tableau 3 |
| 8 | . | . | . | . | . | . | . | . | . | . | 4 | 3 | . | . | . | . | . | |
| 9 | . | . | . | . | . | . | . | . | . | . | 3 | 3 | . | . | . | . | . | |
| 10 | 10 | . | 10 | . | . | . | . | . | . | . | . | 13 | 12 | 16 | . | . | . | |
| 11 | . | 11 | . | 11 | . | . | . | . | . | . | . | 13 | 12 | . | 16 | . | . | |
| 12 | 12 | . | 12 | . | . | . | . | . | . | . | . | 3 | . | 12 | . | 3 | . | |
| 13 | . | 13 | . | 13 | . | . | . | . | . | . | . | . | 3 | . | 13 | . | 3 | |
| 16 | . | . | . | . | . | . | . | . | . | . | . | 13 | 12 | . | . | . | . | |

Table des transitions d'états des unités d'accés (Plugs)
Modèle TCP

Les événements 24 et 25 sont le même événement : 24 pour l'unité d'accés négociant l'acceptation, 25 pour l'unité d'accés bénéficiaire de l'accés négocié.

ANNEXE 4

| CO_1 | CO_2 | CO_3 |
|---|---|---|
| Evénements | Commandes en cours | provenance |
| 9: | DATA | NCCD |
| 21: | CONNECT | NCCD |
| 22: | ACCEPT 1 | HI |
| 27: | DISCONNECT | HI |
| 28: | DISCONNECT | NCCD |
| 31: | DISCONNECT_ACK | HI |
| 33: | UNITDATA | HI |
| 34: | UNITDATA | NCCD |
| 35: | UDERROR | HI |

Tableau 1

| CO_1 | CO_2 | CO_3 |
|---|---|---|
| Etats | Nature états | provenance |
| 3: | IDLE | |
| 4: | transfert connecté de données | |
| 6: | attente ACCEPT | HI |
| 12: | attente DISCONNECT_ACK | HI |

Tableau 2

Evénements

| Etats | 9 | 21 | 22 | 27 | 28 | 31 | 33 | 34 | 35 |
|---|---|---|---|---|---|---|---|---|---|
| 3 | . | 6 | . | . | . | . | 3 | 3 | 3 |
| 4 | 4 | . | . | . | 12 | . | 4 | . | 4 |
| 6 | . | . | 4 | 3 | . | . | 6 | . | 6 |
| 12 | . | . | . | . | . | 3 | 12 | . | 12 |

Tableau 3

Table des transitions d'états unités d'accés
Modèle avec réseau en mode non connecté UDP et ICMP

# ANNEXE 5

- tous les "lengths", "offset" et sizes" sont exprimés en octets de 8 bits.

- "long" définit une variable de taille de 4 octets de 8 bits chacune.

- "double" définit une variable de taille de 8 octets de 8 bits chacune.

- Le premier octet de la commande est l'octet 0 (zéro). C'est à partir de lui que commencent les valeurs des offsets.

- L'octet de gauche d'une variable est l'octet de poids le plus fort.

## A) Partie obligatoire de l'entête de message (mandatory message header part)

Ceci est la partie obligatoire de l'entête (header) de dimension constante.

| | |
|---|---|
| long version | TPA current version( = 1) |
| long Command | prim_type |
| long protocol | protocol identifier |
| long mess_length | total mess length |
| long dest_plug | receiver Plug |
| long src_plug | sender Plug |

## B) Partie variable de l'entête de message (variable message header part)

Cette partie dépend de la nature de la commande
        struc open_plug

Mandatory header for **OPEN_PLUG**

| | |
|---|---|
| long dest_length | dest addr length |
| long dest_offset | dest addr offset |
| long src_length | src addr length |
| long src_offset | src addr offset |
| long qlen | qlen asked value |
| long binascii | binary or ascii mode |
| long opt_length | option length |
| long opt_offset | option offset |
| long udt_length | User data length |
| long udt_offset | User data offset |

struct open_plug_ack

Mandatory header for **OPEN_PLUG_ACK**

| | |
|---|---|
| long dest_length | dest addr length |
| long dest_offset | dest addr offset |
| long src_length | src addr length |
| long src_offset | src addr offset |
| long qlen | qlen negotiated value |
| long binascii | bin-ascii (/inward) |
| long opt_length | option length |
| long opt_offset | option offset |
| long udt_length | User data length |
| long udt_offset | User data offset |

## ANNEXE 5 (suite)

struct close_plug

Mandatory header for **CLOSE_PLUG**
long plug_reason            Plug Reason Code
long cust_reason            reason for customer
long udt_length            User data length
long udt_offset            User data offset

struct close_plug_ack

Mandatory header for **CLOSE_PLUG_ACK**

struct freeze_plug

Mandatory header for **FREEZE_PLUG**
long plug_reason            Plug Reason Code
long cust_reason            reason for customer

struct options

Mandatory header for **OPTIONS**
long opt_length            option length
long opt_offset            option offset
long mngt_flags            flag values

struct Connect

Mandatory header for **CONNECT**
long dest_length            dest addr length
long dest_offset            dest addr offset
long src_length            src addr length
long src_offset            src addr offset
long opt_length            option length
long opt_offset            option offset

struct accept

Mandatory header for **ACCEPT**
long resp_dest_plug        responding dest Plug
long resp_src_plug         responding src Plug
long dest_length            dest addr length
long dest_offset            dest addr offset
long src_length            src addr length
long src_offset            src addr offset
long opt_length            option length
long opt_offset            option offset

# ANNEXE 5 (suite)

**struct accept_ack**

Mandatory header for **ACCEPT_ACK**

**struct orls**

Mandatory header for **ORLS**
| | |
|---|---|
| long upper_com_nb | credit nb in other side |
| long command_nb | this Command nb |
| long plug_reason | Plug Reason Code |
| long cust_reason | reason for custome |

**struct disconnect**

Mandatory header for **DISCONNECT**
| | |
|---|---|
| long plug_reason | Plug Reason Code |
| long cust_reason | reason for customer |

**struct disconnect_ack**

Mandatory header for **DISCONNECT_ACK**

**struct data**

Mandatory header for **DATA**

| | |
|---|---|
| long upper_com_nb | credit nb in other side |
| long command_nb | this Command nb |
| long more_flag | more data (passed but not used) |
| long udt_length | User data length |
| long udt_offset | User data offset |

**struct exdt**

Mandatory header for **EXDT**
| | |
|---|---|
| long upper_com_nb | expdt credit nb in other side |
| long command_nb | this expdt Command nb |
| long udt_length | expdt User data length |
| long udt_offset | expdt User data offset |

# ANNEXE 5 (suite)

```
struct unitdata

Mandatory header for UNITDATA
long upper_com_nb          credit nb in other side
long command_nb            this Command nb
long dest_length           dest addr length
long dest_offset           dest addr offset
long src_length            src addr length
long src_offset            src addr offset
long opt_length            option length
long opt_offset            option offset
long udt_length            User data length
long udt_offset            User data offset


struct uderror

Mandatory header for UDERROR
long upper_com_nb          credit nb in other side
long command_nb            this Command nb
long dest_length           dest addr length
long dest_offset           dest addr offset
long src_length            src addr length
long src_offset            src addr offset
long opt_length            option length
long opt_offset            option offset
long plug_reason           Plug Reason Code
long cust_reason           reason for customer


struct credit

Mandatory header for CREDIT
long upper_com_nb          credit nb in other side


struct exdt_credit

Mandatory header for EXDT_CREDIT
long upper_com_nb          expdt credit nb in other side


struct alive
Mandatory header for ALIVE
long plug_reason           Plug Reason Code
long configuration         conf protocol families
double macaddr             local ncc mac address
```

## Revendications

1. Système de communication (SCI) avec au moins un réseau (RE, RE$_i$, RE$_j$) comprenant un système hôte (HOST) associé au moyen d'un canal (PSB) à au moins un processeur de communication (NCC) lui-même relié à la liaison spécifique du réseau, l'hôte comportant un premier système d'exploitation (SE₁) associé à une pluralité d'applications (A$_i$, B$_i$, C$_i$, etc. ) et le processeur (NCC, PC$_i$, PC$_j$, NCC$_k$) un second système d'exploitation (GPOS) qui organise son travail de transmission des données du bus vers le réseau et réciproquement, le système comprenant :

- un serveur de télécommunication (NCCD) associé au premier système d'exploitation (SE₁), et relié au canal,
- un code de communication (CC) spécifique du processeur appartenant à une pluralité de modèles d'interconnexion de système ouvert (OSI, ISO/DSA, IPS), associé au second système d'exploitation (GPOS),

caractérisé en ce que, l'hôte (HOST) traitant les couches hautes des différents modèles (C$_7$,C$_6$,C$_5$) et le processeur (NCC) les couches basses à partir de la couche de transport (C$_4$, C$_3$, C$_2$), cette dernière pouvant s'appuyer sur au moins un service de réseau en mode connecté (RCONS) et/ou au moins un service de réseau en mode non connecté (RCLNS), il comprend des moyens d'accès (TPAM, HI, TPA) aux couches de transport des différents modèles permettant de relier le niveau inférieur des couches hautes aux dites couches de transport, ces moyens comprenant :

- un premier module (TPAM) disposé à l'intérieur du serveur (NCCD),
- un second module (HI) appartenant au processeur, relié au canal et communiquant avec le code (CC),
- des unités d'accès spécifiques à chaque modèle (TPA_PLUG), le premier et le second module mettant en oeuvre toute unité d'accès déterminée au moyen de commandes d'unité d'accès (OPEN_PLUG, CLOSE_PLUG, etc.) véhiculées par le canal (PSB).

2. Système de communication CSCI selon la revendication 1, caractérisé en ce que chaque unité d'accès (TPA_PLUG) est un tuyau de dialogue entre le premier (TPAM) et le second module (HI) qui effectue un prolongement de connexion entre le niveau bas des couches hautes (C$_5$) et le haut de la couche de transport (C$_4$), une entrée d'application déterminée correspondant à une unité d'accès déterminée.

3. Système de communication selon la revendication 2 caractérisé en ce que l'ensemble des unités d'accès est régi par un seul et même protocole (TPA) qui définit leur règle de fonctionnement et permet de commander l'échange de données entre le premier module (TPAM) et le second module (HI).

4. Système de communication selon la revendication 3 caractérisé en ce que le protocole (TPA) définit une interface de messages allant vers ou provenant du haut de la couches de transport (C4), ces messages étant transmis du premier vers le second module et vice-versa au moyen de commandes d'unités d'accès (TPA_PLUG).

5. Système selon la revendication 4, caractérisé en ce que chaque message transmis par toute commande d'unité d'accès transporte une primitive de service de transport définissant la signification de la commande correspondante (OPEN_PLUG), deux primitives correspondant à chaque type de service de transport relatif à un modèle déterminé, l'une provenant de l'hôte et l'autre du fournisseur de transport (C4) du processeur (NCC).

6. Système selon la revendication 5 caractérisé en ce que toute primitive provenant de l'hôte (HOST) effectue des requêtes au fournisseur de transport (C4) ou répond à un événement (PLUG_EVENT), suscité par ce dernier, un nombre donné et déterminé d'événements étant défini pour chaque modèle.

7. Système selon la revendication 5, caractérisé en ce que toute primitive provenant du fournisseur de transport (C4), est la confirmation d'une requête de l'hôte (HOST) ou la fourniture d'une indication à ce dernier qu'un événement (EVENT) est survenu.

8. Système selon la revendication 3, caractérisé en ce que chaque unité d'accès, (TPA_PLUG), pour chaque connexion ou pseudo-connexion de transport correspondant respectivement à un service de réseau en mode connecté ou un service de réseau en mode non connecté, établit pour chaque événement, une liaison d'unité d'accès qui gère l'accès à la couche de transport, chaque liaison étant à un moment donné dans un état déterminé, le nombre d'états possibles pour un modèle de référence donné étant fini et parfaitement déterminé.

9. Système selon la revendication 8, caractérisé en ce que chaque passage d'un état donné à un autre résulte de l'intervention d'une commande et dépend de l'état précédent dans lequel se trouvait la liaison d'unité d'accès.

EP 0 637 801 A1

FIG. 1

19

FIG.2

FIG.3

FIG.4

**Office européen
des brevets**

**RAPPORT DE RECHERCHE EUROPEENNE**

Numero de la demande

EP 94 40 1498

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE JOURNAL ON SELECTED AREAS IN COMMUNICATION, vol.11, no.2, Février 1993, NEW YORK US pages 220 - 227 M. R. ITO ET AL. 'A multiprocessor approach for meeting the processing requirements for OSI' * le document en entier *  --- | 1 | G06F13/12 H04L29/06 |
| D,A | EP-A-0 524 071 (BULL S.A.) * le document en entier *  ----- | 1 | |

**DOMAINES TECHNIQUES RECHERCHES (Int.Cl.6)**

G06F
H04L

Le présent rapport a été établi pour toutes les revendications

| Lieu de la recherche | Date d'achèvement de la recherche | Examinateur |
|---|---|---|
| BERLIN | 20 Octobre 1994 | Masche, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)